# EUROPÄISCHE PATENTSCHRIFT

(11) **EP 0 921 252 B1**
(45) Veröffentlichungstag und Bekanntmachung des Hinweises auf die Patenterteilung: **07.12.2005**
(21) Anmeldenummer: 98122348.0
(22) Anmeldetag: 25.11.1998
(51) Int. Cl.: E04F 13/08, E04F 15/024, E04B 9/20, E04D 3/36, F16B 35/04, B25H 1/00

(54) **Befestigungselement zur Abstandsbefestigung von Latten, Profilen, Platten oder dergleichen**
Fastening element for distance-fixing of slats, profiles, panels, or the like on a solid base
Elément de fixation pour la fixation à distance de lattes, profilés, panneaux ou similaires sur un support fix

(30) Priorität: 02.12.1997 CH 277497; 22.03.1998 CH 67198
(43) Veröffentlichungstag der Anmeldung: 09.06.1999
(73) Patentinhaber: SFS intec Holding AG, 9435 Heerbrugg (CH)
(72) Erfinder: Stillhart, Thomas, 9200 Gossau 2 (CH)

(56) Entgegenhaltungen:
- CH-A- 569 159
- CH-A- 598 438
- DE-A- 3 127 736
- DE-C- 19 537 000
- US-A- 4 759 666
- US-A- 4 928 531

## Beschreibung

Die Erfindung betrifft ein Befestigungselement zur Abstandsbefestigung von Latten, Profilen oder Platten an einem festen Untergrund, bestehend aus einem am Untergrund festlegbaren Bolzen, welcher an dem in der bestimmungsgemäßen Lage vom Untergrund frei auskragenden Ende einen Gewindeabschnitt aufweist, und einer auf den Gewindeabschnitt aufschraubbaren Halterung, wobei der Bolzen mit zumindest an seinen beiden Endbereichen ausgebildeten Gewindeabschnitten versehen ist und im Bereich zwischen den beiden Gewindeabschnitten einen Werkzeugangriff für ein Eindrehwerkzeug aufweist.

Die meisten im Fassadenbau verwendeten Systeme bestehen aus Metallwinkeln, welche auf ein Mauerwerk gedübelt werden. Das Problem besteht darin, dass die thermische Isolierung nicht sauber und einfach an diese Winkel angepasst werden kann. Des weiteren ist es problematisch, eine Dampfsperre zu montieren, ohne diese zu verletzen.

Eine bekannte Ausgestaltung einer Haltevorrichtung für Fassaden- oder Innenwandverkleidungen (CH-569159-A5) sieht einen in den Untergrund eindrehbaren Gewindestab vor, dessen eines Ende in einen in der Wand verankerten Dübel eingedreht wird und auf dessen anderem Ende eine Gewindehülse aufgesetzt ist, welche zur Einjustierung des Abstandes von der Wand auf dem Gewindestab verdrehbar ist.

Ferner ist ein Verfahren zur einstellbaren Befestigung von Latten an einem Untergrund bekannt (DE-19537000-C1), bei welchem ein Gewindebolzen mit einem Innenangriff für ein Werkzeug eingesetzt wird. Ferner wird eine auf den Gewindebolzen aufdrehbare Gewindemutter vorgesehen, welche gegenüber dem Gewindebolzen schwergängig ausgeführt ist. Die Latte wird dadurch praktisch zwischen der Gewindemutter und dem Kopf des Bolzens eingespannt. Durch mehr oder weniger weites Eindrehen des Gewindebolzens in den Untergrund ist eine Justierung der Latte gegenüber dem Untergrund möglich.

Bei einer anderen bekannten Haltevorrichtung für Fassen- oder Innenwandverkleidungen (CH-598438A5) wird ein mit zwei Gewindeabschnitten versehener Bolzen vorgesehen, wobei der eine Gewindeabschnitt ein linksgängiges Gewinde und der andere Gewindeabschnitt ein rechtsgängiges Gewinde aufweist. Der Bolzen wird in eine Konsole mit Innengewinde oder in einen in eine Bohrung in einer Wand eingesetzten Dübel eingedreht. Auf den anderen Gewindeabschnitt wird eine Gleitmutter aufgedreht. Nachdem dann eine Trägerschiene auf die Gleitmutter aufgesetzt ist, kann die Gleitmutter nicht mehr gedreht werden, da diese numehr geradlinig in die Trägerschien eingreift. Es muss also von vorne herein eine exakte Ausrichtung der Gleitmutter auf dem Gewinde stattfinden.

Die vorliegende Erfindung hat sich zur Aufgabe gestellt, ein Befestigungselement der eingangs genannten Art so auszubilden, dass eine optimale Montage, insbesondere im Fassadenbau, aber auch im Decken-, Fußboden- und Dachbereich möglich ist.

Erfindungsgemäß gelingt dies dadurch, dass der eine Gewindeabschnitt als Holzgewinde und der andere Gewindeabschnitt als Maschinengewinde ausgeführt ist, dass unterhalb des Werkzeugangriffes ein scheibenartiger Bund nach Art einer Unterlegscheibe, gegebenenfalls-einstückig mit dem Bolzen, ausgebildet oder angeordnet ist und somit einen größeren Durchmesser aufweist als der Bolzen selbst, dass die Halterung Laschen für die festlegbare Halterung der Latten, Profile oder Platten aufweist und aus einer auf den zweiten Gewindeabschnitt aufschraubbaren, mit einem Innengewinde versehenen Hülse und einer mit der Hülse verbundenen Lasche, Winkellasche, einem Profilteil od. dgl. gebildet ist.

Durch diese Ausbildung wird insbesondere die Möglichkeit geschaffen, die Befestigungselemente direkt am Untergrund fest montieren zu können, bevor irgendwelche Aufbauten oder Isolierelemente den Untergrund abdecken. Außerdem wird durch diese erfindungsgemäßen Maßnahmen eine optimale Einstellmöglichkeit gewährleistet, indem durch das nachträgliche Eindrehen der Halterung eine Einstellgenauigkeit auf eine Gewindesteigung möglich ist, was bei Befestigungselementen im Fassadenbereich eine ausgezeichnete Genauigkeit bedeutet. Wenn die Halterung in zwei um 180° verdrehten Stellungen eingesetzt werden kann, ist sogar der Einstellbereich einer halben Gewindegewindesteigung möglich. Zudem wird damit auch die Möglichkeit geschaffen, trotz eventuell gleichbleibendem Bolzen andere Halterungen zu verwenden, je nachdem, welche Art von Fassadenverkleidungen, Dach-, Decken- oder Fußbodenelementen angebracht wird.

Durch die Erfindung wird ein konstruktiv einfaches Befestigungselement geschaffen, welches je nach Untergrund direkt oder nach Herstellung einer Bohrung eingedreht bzw. nach Einsetzen eines Dübels eingesetzt werden kann. Der frei vorstehende Gewindeabschnitt, welcher später die Halterung trägt, bietet eine optimale Möglichkeit zum Verlegen der Isolierschichten, z.B. von Isolierbahnen oder -platten, da die frei auskragenden Bolzenabschnitte einfach durch die Isolierbahnen oder -platten hindurchgestoßen werden können und somit die Isolierbahnen oder -platten bereits beim Aufbringen entsprechend halten. Es ist auch bei Aufbringen eines entsprechenden Kraftaufwandes ein ordnungsgemäßes Setzen des Bolzens im Untergrund möglich, damit dieser die erforderlichen Auszugs- und Biegebelastungen übernehmen kann.

In diesem Zusammenhang ist es vorteilhaft, dass der eine Gewindeabschnitt als Holzgewinde und der andere Gewindeabschnitt als Maschinengewinde ausgeführt ist. Bei einem Unterbau aus Holz ist das Holzgewinde direkt einsetzbar. Ferner besteht die Möglichkeit, den Bolzen auch bei Anwendung eines Dübels einsetzen zu können.

Demgemäß ist einerseits eine einfache Konstruktion gegeben, um die Halterung mit den bereits in den Untergrund eingesetzten Bolzen oder einer entsprechenden Hülse zu verbinden, andererseits bedeutet dies eine Möglichkeit zur exakten Abstandseinstellung, vor allem aber sind keine zusätzlichen Befestigungselemente, wie z.B. Kontermuttern oder dergleichen, erforderlich.

Da der Werkzeugangriff bundartig ausgeführt ist und somit einen größeren Durchmesser aufweist als der Bolzen selbst, ist ein entsprechender Tiefenanschlag gegeben, bis zu welchem der Bolzen für einen ordnungsgemäßen Sitz in den Untergrund eingedreht werden soll. Von Vorteil ist dabei auch der unterhalb des Werkzeugangriffes vorgesehene, scheibenartiger Bund nach Art einer Unterlegscheibe, welcher gegebenenfalls einstückig mit dem Bolzen, ausgebildet oder angeordnet ist. Dies gewährleistet eine gegenüber dem Untergrund noch bessere Abstützung und einen effektiven Endanschlag beim Eindrehen des Bolzens.

Mittels der erfindungsgemäßen Ausführung ist es auch möglich, Dampfsperren optimal einzusetzen, da durch die konstruktive Ausgestaltung im unmittelbar eine Dampfsperre durchstoßenden Bereich ein Anschlag möglich ist. Vorteilhaft ist daher, wenn unterhalb des scheibenartigen Bundes eine Dichtscheibe oder eine Dichtungsmasse eingesetzt ist. Dadurch ergeben sich in dem mit dem Bolzen durchstoßenden Bereich der Dampfsperre keinerlei Probleme.

Weiter wird vorgeschlagen, dass die einen Teil der Halterung bildenden Laschen, Winkellaschen, Profilteile oder dergleichen Bohrungen oder sonstige Ausnehmungen zum Einsatz von Nägeln oder Schrauben aufweisen. Die einzusetzenden Latten, Profile, Platten oder dergleichen können also auch unmittelbar an den Halterungen befestigt werden.

Um die Halterungen nach dem Ansetzen an den Bolzen oder eine entsprechende Hülse gut handhaben zu können, wird vorgeschlagen, dass an der Lasche, an der Winkellasche, an dem Profilteil oder dergleichen oder an dem der Lasche oder dergleichen zugeordneten Ende der Hülse oder der Schraube ein Werkzeugangriff, z.B. ein Innensechskantangriff, ausgebildet ist. Dadurch kann von der frei liegenden Seite der Halterung her ein Werkzeug angesetzt werden.

Weitere erfindungsgemäße Merkmale und besondere Vorteile werden in der nachstehenden Beschreibung anhand der Zeichnungen noch näher erläutert. Es zeigen:
- Fig.: 1 eine Seitenansicht eines einen Teil des Befestigungselementes bildenden Bolzens;
- Fig. 2: eine Ansicht in Pfeilrichtung II in Fig. 1;
- Fig. 3: eine Seitenansicht einer Halterung;
- Fig. 4: eine Ansicht in Pfeilrichtung IV in Fig.3;
- Fig.5: einen Vertikalschnitt durch ein Einssatzbeispiel eines Befestigungselementes;
- Fig. 6: eine Ansicht eines fertig montierten Befestigungselementes, teilweise aufgeschnitten dargestellt;
- Fig. 7: eine Ausführungsvariante mit besonderer Ausbildung des Bolzens und der Halterung, dargestellt in einem Vertikalschnitt durch eine fertige Montageanordnung.

Ein erfindungsgemäßes Befestigungselement besteht im Wesentlichen aus einem in einen Unterbau einsetzbaren Bolzen 15 und einer Halterung 16. Anstelle des in den Unterbau einsetzbaren Bolzens kann auch eine Hülse 21 vorgesehen werden, wobei diese entweder direkt in eine Bohrung in den Untergrund eingesetzt wird oder aber die Befestigung über eine Ankerplatte erfolgt. Eine Befestigung über eine Ankerplatte kann auch bei Einsatz eines Bolzens 15, 45 erfolgen. Die Halterung 16 kann, wie nachstehend noch näher erläutert, auf verschiedenste Art und Weise ausgeführt werden. Wesentlich ist, dass die Halterung erst nach dem Setzen der Bolzen 15, 45 und nach dem Aufbringen eventueller Isolierelemente montiert wird.

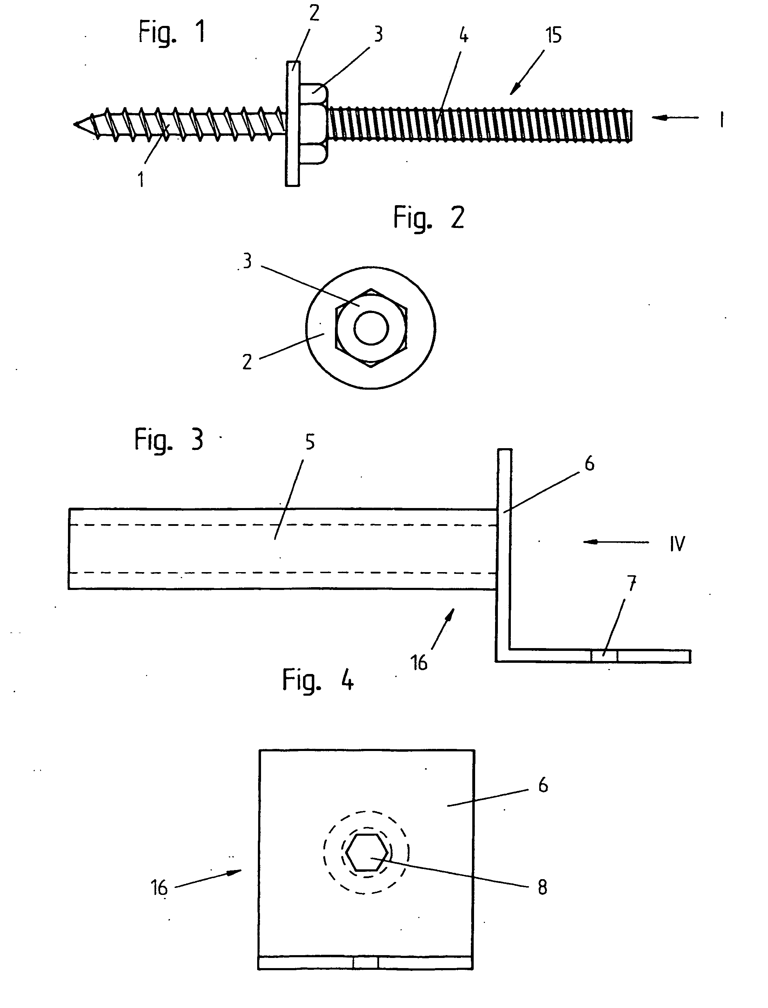

Wie in den Fig. 1 und 2 dargestellt, weist ein erfindungsgemäßer Bolzen 15 zwei Gewindeabschnitte auf, und zwar ein Holzgewinde 1 und ein Maschinengewinde 4. Die Länge des Holzgewindes 1 richtet sich nach den befestigungstechnischen Ansprüchen und die Länge des Maschinengewindes nach dem gewünschten Vorhängeabstand. Ein fest angeordneter scheibenartiger Bund 2 dient als Auflage auf dem Untergrund und zur Aufnahme einer eventuellen Dichtung für eine Dampfsperre. Ein bundartiger Angriffsbereich 3 ist zum Ansetzen eines Eindrehwerkzeuges ausgebildet und vorzugsweise als Sechskant ausgeführt. Der Durchmesser des Bolzens 15 richtet sich nach den statischen Anforderungen. Wie in den Fig. 3 und 4 dargestellt, besteht die Halterung 16 aus einer Hülse 5 und einem fest mit dieser verbundenen Winkel 6. Die Hülse besitzt ein auf das Maschinengewinde 4 des Bolzens 15 angepasstes Innengewinde. Die Länge der Hülse 5 ergibt sich durch die geforderte Schiftstärke (Isolationsdicke) und die statischen Ansprüche. Der Winkel 6 dient als Auflage für eine Latte 17 und weist ein Loch 7 auf, durch welches die aufgebrachte Latte 17 mit einer Schraube befestigt werden kann. Es können auch mehrere Löcher vorgesehen und mehrere Schrauben eingedreht werden. Die Materialstärke des Winkels 6 richtet sich nach den statischen Anforderungen. Die Schenkellänge des Winkels 6 ergibt sich durch die Dimension der aufzubringenden Latte 17. Im Zentrum im Bereich der Hülse 5 weist der Winkel 6 eine Sechskantaussparung 8 auf, welche zur Aufnahme eines passenden Werkzeuges dient.

Der erfindungsgemäße Bolzen 15 kann auf verschiedene Art und Weise ausgeführt sein. So ist es, wenn der Unterbau z.B. aus Metall oder einem Metallgerüst besteht, auch denkbar, anstelle des Holzgewindes 1 ebenfalls ein Maschinengewinde vorzusehen. Dannzumal müssten in dem Untergrund vorab Gewindebohrungen hergestellt werden. Der Gewindeabschnitt kann aber auch selbstgewindeschneidend ausgeführt sein, so dass in dem metallischen Untergrund lediglich entsprechende Löcher hergestellt werden müssten. Eine solche Ausgestaltung ist grundsätzlich auch bei einem Untergrund aus Beton oder sonstigem festem Material, welches zulässt, dass in die Wandung einer Bohrung ein Gewinde eingeschnitten bzw. eingeformt wird, denkbar. Gerade bei einem metallischen Unterbau ist es ebenfalls vorstellbar, den Bolzen 15 an dem in den Untergrund eindringenden Ende mit einem Bohrteil auszustatten, so dass sich der Bolzen 15 das Loch selbst bohren kann. Das darauf folgende Maschinengewinde formt sich dann das Gewinde in dem hergestellten Loch selbst, so dass ein Bolzen 5 praktisch in einem Arbeitsgang gesetzt werden kann.

Sind die Löcher gebohrt, werden auf dem Mauerwerk oder dem Beton Dübel in die Löcher eingebracht, bei Holz erübrigt sich das. Dann werden die Bolzen 15 gemäß den Fig. 1 und 2 in die vorgängig gebohrten Löcher eingeschraubt, bis der scheibenartige Bund 2 auf der Wand aufliegt. Wurde eine Dampfsperre aufgebracht, wird zwischen Dampfsperre und Bund 2 eine Dichtung eingesetzt. Anschließend wird die thermische Isolierschicht vollflächig aufgebracht, indem über das Muttergewinde 4 der Bolzen 15 z.B. Isolierplatten gedrückt werden. Fixiert werden die Isolierplatten durch Aufschrauben der Hülse 5 mit dem Winkel 6 gemäß den Fig. 3 und 4 auf das Muttergewinde 4 des Bolzens 15. Ist die ganze Wand isoliert und sind alle Hülsen 5 mit Winkel 6 eingesetzt, werden Unebenheiten ausgeglichen, indem die aus Hülse 5 und Winkel 6 bestehende Halterung 16 mehr oder weniger auf das Muttergewinde 4 des Bolzens 15 aufgeschraubt wird. Wenn alle Halterungen 16 genau ausgerichtet sind, wird eine Latte 17 in der gewünschten Dimension auf den Winkel 6 gebracht und durch die Löcher 7 im Winkel 6 angeschraubt. Nun können auch noch der Zwischenraum der Lattung isoliert und eine Winddichtung über die Lattung angebracht werden. Zur Bildung einer hinterlüfteten Fassade wird auf die Latten 17 die gewünschte Unterlage für entsprechende Platten 19, Latten oder dergleichen aufgebracht.

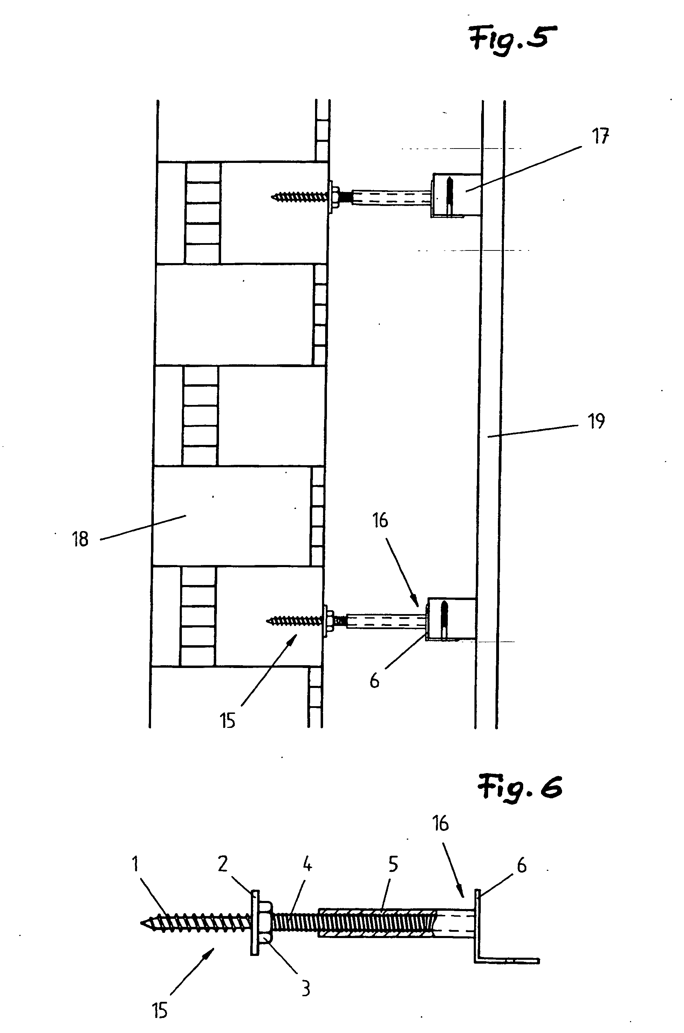

Fig. 5 zeigt einen senkrechten Schnitt durch die oben erläuterte Anwendung. Der Vorteile der beschriebenen Unterkonstruktion liegen in der einfachen und genauen Montage sowie der Möglichkeit, vollflächig isolieren zu können.

Die beschriebene Unterkonstruktion kann aber auch ohne Einbringen von Isolationsmaterial hergestellt werden. Ebenso kann nachträglich durch Einblasen von geeignetem Isoliermaterial oder nachträgliches Ausschäumen isoliert werden.

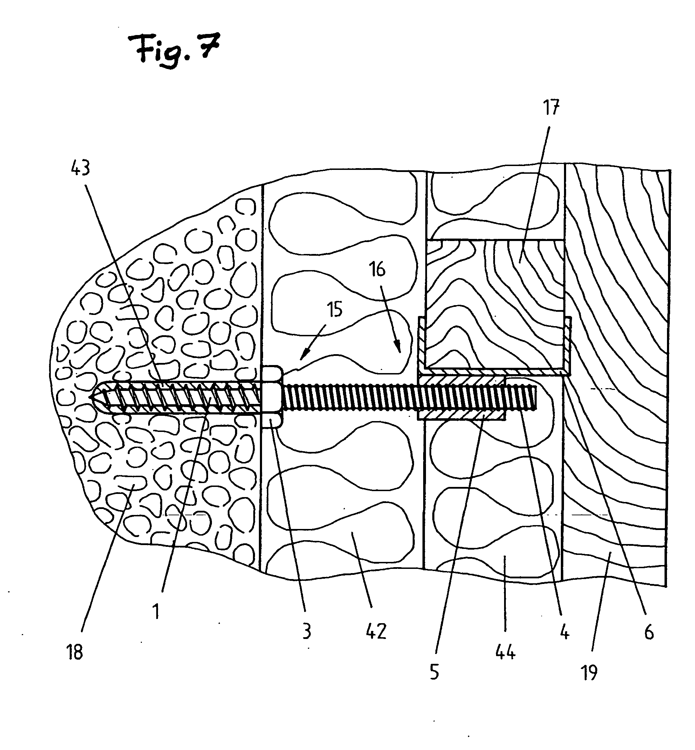

Die Ausgestaltung nach Fig. 7 zeigt einen Aufbau, bei welchem ein Bolzen 15 mit einerseits einem Holzgewinde 1 und andererseits mit einem Maschinengewinde 4 eingesetzt ist, wobei nach dem Setzen des Bolzens 15 die Isolierbahnen 42 aufgebracht werden, so dass die freien Enden der Bolzen 15 mit dem als Maschinengewinde 4 ausgebildeten Gewindebereich über die Isolierschicht 42 hinausstehen. Nun kann die Hülse 5 aufgeschraubt werden, an welcher der Winkel 6 befestigt ist. Der Winkel 6 ist diesfalls als nach oben hin offenes U-Profil ausgebildet. In den Winkel 6 kann dann die Latte 17 eingelegt werden, wobei bei einer solchen Konstruktion nur eine geringfügige Befestigung der Latte 17 an den Winkel 6 erforderlich erscheint. An sich könnte diese zusätzliche Befestigung auch weggelassen werden. Jetzt wird zwischen den somit horizontal durchgehenden Latten 17 eine weitere Isolierschicht 44 eingebracht, welche den Raum zwischen den horizontal durchgehenden Latten 17 praktisch zusätzlich ausfüllt. An den Latten 17 werden die vertikal ausgerichteten Latten 19 oder gleich entsprechende Fassadenverkleidungen aufgebracht.

Grundsätzlich können alle Teile oder Einzelteile des erfindungsgemäßen Befestigungselementes aus verschiedenen Werkstoffen gefertigt werden. Gerade für einige Teile hat sich jedoch der Einsatz von Kunststoff als vorteilhaft herausgestellt, weil eben eine schlechte Wärmeleitung gefragt ist, um Wärme- und Kältebrücken zu verhindern. Anstelle von Kunststoff können für einzelne oder für alle Teile der Befestigungselemente aber auch andere, schlecht wärmeleitende Materialien eingesetzt werden.

Durch die erfindungsgemäßen Maßnahmen ist nicht nur eine einfache und wirkungsvolle Montage von Wand-, Decken-, Boden- oder Dachverkleidungen möglich, sondern es ergeben sich auch viele zusätzliche Vorteile und Effekte im Hinblick auf eine schnelle und wirkungsvolle Befestigung, eine besondere Wärme- und Schalldämmung und bezüglich einer günstigen Krafteinleitung über die erfindungsgemäßen Befestigungselemente in den Untergrund.

## Patentansprüche

1. Befestigungselement zur Abstandsbefestigung von Latten, Profilen oder Platten an einem festen Untergrund, bestehend aus einem am Untergrund festlegbaren Bolzen (15, 45), welcher an dem in der bestimmungsgemäßen Lage vom Untergrund (18) frei auskragenden Ende einen Gewindeabschnitt (4) aufweist, und einer auf den Gewindeabschnitt (4) aufschraubbaren Halterung (16), wobei der Bolzen (15) mit zumindest an seinen beiden Endbereichen ausgebildeten Gewindeabschnitten (1,4) versehen ist und im Bereich zwischen den beiden Gewindeabschnitten einen Werkzeugangriff (3) für ein Eindrehwerkzeug aufweist, **dadurch gekennzeichnet, dass** der eine Gewindeabschnitt (1) als Holzgewinde und der andere Gewindeabschnitt (4) als Maschinengewinde ausgeführt ist, dass unterhalb des Werkzeugangriffes (3) ein scheibenartiger Bund (2) nach Art einer Unterlegscheibe, gegebenenfalls einstückig mit dem Bolzen (15), ausgebildet oder angeordnet ist und somit einen größeren Durchmesser aufweist als der Bolzen selbst, dass die Halterung (16) Laschen für die festlegbare Halterung der Latten (17,33), Profile oder Platten aufweist und aus einer auf den zweiten Gewindeabschnitt aufschraubbaren, mit einem Innengewinde versehenen Hülse (5) und einer mit der Hülse (5) verbundenen Lasche, Winkellasche, einem Profilteil od. dgl. gebildet ist.

2. Befestigungselement nach Anspruch 1, **dadurch gekennzeichnet, dass** unterhalb des scheibenartigen Bundes (2) eine Dichtscheibe oder eine Dichtungsmasse eingesetzt ist.

3. Befestigungselement nach Anspruch 1, **dadurch gekennzeichnet, dass** die einen Teil der Halterung (16) bildenden Laschen, Winkellaschen, Profilteile oder dergleichen Bohrungen (7, 32) oder sonstige Ausnehmungen zum Einsatz von Nägeln oder Schrauben aufweisen.

4. Befestigungselement nach Anspruch 3, **dadurch gekennzeichnet, dass** an der Lasche, an der Winkellasche, an dem Profilteil oder dergleichen oder an dem der Lasche oder dergleichen zugeordneten Ende der Hülse (5) ein Werkzeugangriff, z.B. ein Innensechskantangriff, ausgebildet ist.

## Claims

1. A fastening element (1) for fastening at a distance battens, section elements or panels to a fixed subsurface, comprising a stud (15,45) which can be located on the subsurface and which has a threaded portion (4) on its end projecting freely from the subsurface (18) in the designated position, and a mounting (16) which can be screwed on to the threaded portion (4), wherein the stud (15) is provided with threaded portions (1,4) at least at its two end zones and in the region between the two threaded portions has a tool engagement portion (3) for a screwing-in tool, **characterised in that** one threaded portion (1) is in the form of a wood screw-thread and the other threaded portion (4) is in the form of a machine screw-thread, **in that** below the tool engagement portion (3) a disc-type flange (2) is formed or arranged in the manner of a flat washer, optionally in one piece with the stud (15), and thus is of a larger diameter than the stud itself, **in that** the mounting (16) has fishplates for the locatable mounting of the battens (17,33), section elements or panels, and is formed from a sleeve (5), which can be screwed on to the second threaded portion and is provided with an internal screw-thread, and from a fishplate, an angle fishplate, a section member or the like connected with the sleeve (5).

2. A fastening element according to Claim 1, **characterised in that** a sealing disc or a sealant is inserted below the disc-type flange (2).

3. A fastening element according to Claim 1, **characterised in that** the fishplates, angle fishplates, section members or the like forming a part of the mounting (16) have bores (7,32) or other recesses for the insertion of nails or screws.

4. A fastening element according to Claim 3, **characterised in that** a tool engagement portion, for example a hexagon socket, is formed on the fishplate, on the angle fishplate, on the section member or the like, or on the end of the sleeve (5) associated with the fishplate or the like.

## Revendications

1. °) Elément de fixation pour la fixation à distance de lattes, profilés ou panneaux sur une base fixe, comprenant un boulon (15, 45)- -pouvant être fixé au niveau de la base et présentant au niveau de son extrémité dépassant librement de la base (18), dans la position prévue, une section filetée (4), et comprenant également un support (16) pouvant être vissé sur la section-filetée (4), le boulon (15) étant pourvu de sections filetées (1, 4) configurées au moins au niveau de ses deux zones d'extrémité et présentant, dans la zone située entre les deux sections filetées, une prise d'outil (3) pour un outil de vissage,
**caractérisé en ce que**
la première section filetée (1) est configurée sous forme de filetage à bois tandis que fautre section filetée (4) est configurée sous forme de filetage à métaux,
en dessous de la prise d'outil (3) est configuré ou disposé un collier (2) en forme de rondelle, le cas échéant fait d'une seule pièce avec le boulon (15) et présentant un diamètre supérieur à celui du boulon lui-même,
le support (16) présente des pattes pour le support avec fixation possible des lattes (17, 33), profilés ou panneaux et est formé d'une douille dotée d'un filetage intérieur (5) pouvant être vissée sur la deuxième section filetée, ainsi que d'une patte, cornière, pièce profilée ou analogue reliée à la douille (5).

2. Elément de fixation selon la revendication 1,
**caractérisé en ce qu'**
en dessous du collier (2) en forme de rondelle est placée une rondelle d'étanchéité ou une masse d'étanchéité.

3. Elément de fixation selon la revendication 1,
**caractérisé en ce que**
les pattes, cornières, pièces profilées ou analogues formant une partie du support (16) présentent des perçages (7, 32) ou autres évidements pour l'insertion de clous ou de vis.

4. Elément de fixation selon la revendication 3,
**caractérisé en ce que**
la patte, la cornière, la pièce profilée ou encore analogue, ou l'extrémité de la douille (5) associée à la patte ou analogue, comporte une prise d'outil, par exemple une prise pour six pans creux.
